(19) Europäisches Patentamt
European Patent Office
Office européen des brevets

(11) Veröffentlichungsnummer : **0 045 906**
**B1**

(12) # EUROPÄISCHE PATENTSCHRIFT

(45) Veröffentlichungstag der Patentschrift : **18.09.85**

(51) Int. Cl.⁴ : **C 08 F283/12**, C 08 F255/02

(21) Anmeldenummer : **81105996.3**

(22) Anmeldetag : **30.07.81**

(54) **Bei Raumtemperatur vernetzbare Pfropfpolymerisat-Dispersionen.**

(30) Priorität : **09.08.80 DE 3030195**

(43) Veröffentlichungstag der Anmeldung : **17.02.82 Patentblatt 82/07**

(45) Bekanntmachung des Hinweises auf die Patenterteilung : **18.09.85 Patentblatt 85/38**

(84) Benannte Vertragsstaaten : **BE DE FR GB IT NL**

(56) Entgegenhaltungen :
**CH-A- 481 966**
**DE-A- 1 694 973**
**DE-A- 2 832 893**
**FR-A- 2 105 982**
**FR-A- 2 364 236**

(73) Patentinhaber : **BAYER AG**
**Konzernverwaltung RP Patentabteilung**
**D-5090 Leverkusen 1 Bayerwerk (DE)**

(72) Erfinder : **Alberts, Heinrich, Dr.**
**Morgengraben 16**
**D-5000 Köln 80 (DE)**
Erfinder : **Friemann, Hans, Dr.**
**Silesius-Strasse 82**
**D-5000 Köln 80 (DE)**
Erfinder : **Moretto, Hans-Heinrich, Dr.**
**Formesstrasse 13**
**D-5000 Köln 80 (DE)**
Erfinder : **Sattlegger, Hans, Dr.**
**Auf dem Heidchen 9**
**D-5068 Odenthal (DE)**
Erfinder : **Mietzsch, Fritz, Dr.**
**Hauptstrasse 364 W 1017**
**D-5060 Bergisch Gladbach 2 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**EP 0 045 906 B1**

**Beschreibung**

Die Erfindung betrifft bei Raumtemperatur härtbare, stabile Copfropfpolymerisatdispersionen aus endständig OH-funktionellen Organopolysiloxanen und gegebenenfalls weiteren Polydiorganosiloxanen, Ethylen-Vinylester-Copolymeren und Vinylpolymeren, ein Verfahren zu ihrer Herstellung und die Verwendung dieser Copfropfpolymerisatdispersionen.

Bei Raumtemperatur härtbare Polymersysteme auf Basis von Organopolysiloxanen sind bekannt (vgl. z. B. W. Noll, Chemie und Technologie der Silikone, Verlag Chemie GmbH, 1968, S. 391 ff).

Ferner ist die Herstellung von modifizierten Organopolysiloxanen nach verschiedenen Arbeitsweisen möglich und bekannt. Pfropfpolymere aus Organosiloxanen und Vinylpolymeren sind beispielsweise in den Patentschriften GB 766 528, GB 806 582, GB 869 482 und DE-AS-1 694 973 beschrieben. In der DE-AS-1 694 973 wird die Anwendung von Organopolysiloxanen mit aufgepfropfter organischer Kette und maximal 25 % Arylresten in bei Raumtemperatur härtenden 1- oder 2-Komponentenmassen beschrieben. Es wird ausgeführt, daß die erfindungsgemäß eingesetzten Hydroxypolysiloxane in jedem Fall bis zu maximal 25 % Arylreste enthalten.

Ferner wird ausgeführt, daß die aufgepfropfte organische Kette durch polymerisierte Einheiten von Vinyl-monomeren, bevorzugt Styrol und Acrylester, gebildet wird.

Ferner sind Mischungen aus einem Nicht-Silikonpolymeren, beispielsweise einem Polyolefin, Olefincopolymeren wie Ethylen-Alkylacrylat oder Ethylen-Vinylestercopolymeren, und einem Monoorganopolysiloxanharz bekannt (DT-OS-2 832 893). Diese in DT-OS-2 832 893 beschriebenen Polymerzusammensetzungen sind aus der Schmelze verarbeitbar, dienen der Beschichtung von z. B. Drähten und weisen einen geringen Sauerstoffindex auf, können aber nicht als bei Raumtemperatur durch Umgebungsfeuchtigkeit härtende Dichtungsmassen verwendet werden.

Aus der FR-A-2 364 236 sind Gemische aus Polysiloxanen und anderen Polymerisaten bekannt. Als Ausgangssubstanzen werden dabei monomere Substanzen eingesetzt, die in Gegenwart der Polysiloxane polymerisiert werden.

In DT-AS-2 142 597 wird die Verwendung von Block- oder Pfropf-Copolymeren aus 5-95 Gew.-% eines Polydiorganosiloxans und 5-95 Gew.-% eines homo- oder copolymeren Vinylthermoplasten als Homogenisierungsmittel zur Herstellung eines homogenen Gemisches aus einem Polydiorganosiloxan und einem Vinylthermoplasten beschrieben, wobei der angeführte Vinylthermoplast in einer Mengen von wenigstens 40 Gew.-%, bezogen auf das Gesamtgewicht der Mischung, vorliegt. Die Herstellung der Pfropfcopolymeren erfolgt stets mit Hilfe von Polyorganosiloxanen mit reaktiven Gruppen, die mit den freien Radikalen des Polymerisationssystems reagieren. Beispiele für solche reaktive Gruppen sind siliciumgebundene Vinyl- oder 3-Mercaptopropylgruppen. Ein Weg zur Erzeugung der Mischungen aus Vinylthermoplast und Polydiorganosiloxan besteht darin, das Polydiorganosiloxan und z. B. das Pfropfcopolymere in Vinylmonomeren zu lösen und dann das Vinylmonomere zu polymerisieren. Die erhaltenen gleichmäßigen Dispersionen von Polyorganosiloxanen im Vinylthermoplasten verleihen dem Vinylthermoplasten verbesserte Verarbeitungseigenschaften. Eine Verwendung dieser Mischungen für elastomere Silikonmassen, die durch Aushärtung mit Luftfeuchtigkeit bei Raumtemperatur erhalten werden, wird nicht erwähnt und könnte mit derartigen Systemen auch nicht praktiziert werden.

Ethylen-Vinylacetatcopolymere sind technisch bedeutende Thermoplaste und Elastomere. Ein besonders hervorstechendes Merkmal dieser Copolymeren ist ihre ausgezeichnete Alterungsbeständigkeit auch bei höheren Temperaturen. Mischungen aus Polydiorganosiloxanen und Ethylen-Vinylacetatcopolymeren sind nicht stabil, da die Ausgangspolymeren völlig unverträglich sind. Obwohl es wünschenswert wäre, die ausgezeichneten Gebrauchseigenschaften von Ethylen-Vinylacetatcopolymeren mit denen von Silikonelastomeren zu kombinieren, gelang dies bis heute nicht in technisch befriedigender Weise.

Aufgabe der Erfindung war es daher, phasenstabile Mehrphasensysteme aus Organopolysiloxanen und Ethylen-Vinylester-Copolymeren zur Verfügung zu stellen.

Es war ferner Aufgabe der Erfindung, Silikonmassen bereitzustellen, die, gegebenenfalls nach Zugabe von Weichmachern, wie z. B. methylendgestoppten Organopolysiloxanen, Füllstoffen, Vernetzern, Vernetzungskatalysatoren und die Vernetzung beschleunigenden Komponenten und nach der in der an sich bekannten Weise erfolgten Vernetzung bei Raumtemperatur, verbessert lackierbar sind und verbesserte Haftung auf verschiedenen Untergründen aufweisen.

Beide Aufgaben wurden dadurch gelöst, daß Mischungen aus Organopolysiloxanen, Ethylen-Vinylestercopolymeren und Vinylmonomeren, in Gegenwart von Radikalbildnern einer radikalischen Polymerisation unterzogen werden. Man erhält stabile Dispersionen, die aus einer Ethylen-Vinylestercopolymerkomponente, einem Organopolysiloxan und polymerisierten Einheiten eines oder mehrerer Vinylmonomerer bestehen und über polymerisierte Einheiten der eingesetzten Vinylmonomeren quervernetzte Pfropfcopolymere aus Organopolysiloxan und eingesetzten Ethylen-Vinylestercopolymer enthalten.

Somit sind Gegenstand der Erfindung Copfropfpolymerisat-dispersionen, dadurch gekennzeichnet, daß sie OH-funktionelle Organopolysiloxane und gegebenenfalls weitere Polydiorganosiloxane, Ethylen-Vinylestercopolymere mit 5 bis 99 Gew.-% eingebautem Vinylester und in Gegenwart von Mischungen aus diesen Organopolysiloxanen und Ethylen-Vinylestercopolymeren polymerisierte Einheiten aus Vinylmonomeren und über Vinylpolymerisatbrücken verknüpfte Organopolysiloxan- und Ethylen-Vinylestercopolymer-Komponenten enthalten. Sie bestehen aus

I. 10-90 Gew.-% endständig OH-funktionellen Organopolysiloxanen

II. 0-40 Gew.-% Organopolysiloxanen mit Trimethylsilylendgruppen

III. 5-85 Gew.-% Ethylen-Vinylestercopolymeren mit 5-99 Gew.-% eingebautem Vinylester

IV. 5-85 Gew.-% polymerisierten Einheiten aus Vinylverbindungen, wobei die Summe der Komponenten I-IV stets 100 % beträgt.

Ferner sind Gegenstand der Erfindung Copfropfpolymerisatdispersionen, bei denen die Komponente IV aus 5-85 Gew.-% polymerisierten Einheiten aus Vinylestern, α,β-ungesättigten Carbonsäuren, Derivaten α,β-ungesättigter Mono- oder Dicarbonsäuren, Vinylaromaten wie Styrol, α-Methylstyrol oder 4-Chlorstyrol, α-Olefinen wie Ethylen, Propylen, Buten-1 oder Isobutylen, halogenierten Vinylmonomeren wie Vinylchlorid, Vinylidenchlorid, Vinylfluorid, Vinylidenfluorid, Tetrafluorethylen, Trifluorchlorethylen, Vinylether wie Ethylvinylether, n-Butylvinylether, Allylverbindungen wie Allylalkohol, Allylacetat, Allylcarbonate, Diallylcarbonat, Diallylphthalat, Divinylverbindungen wie Divinylbenzol, Divinylether oder (Meth)Acrylsäureestern mehrwertiger Alkohle oder Gemische dieser Monomeren besteht, wobei die Summe der Komponenten I-IV stets 100 % beträgt.

Gegenstand der Erfindung sind ferner Copfropfpolymerisatdispersionen, bestehend aus

I. 10-90 Gew.-% endständig OH-funktionellen Organopolysiloxanen

II. 0-40 Gew.-% Organopolysiloxanen mit Trimethylsilylendgruppen

III. 5-85 Gew.-% Ethylen-Vinylacetatcopolymeren mit 25-75 Gew.-% eingebautem Vinylacetat

IV. 5-85 Gew.-% polymerisierten Einheiten aus Vinylacetat,

V. 0-80 Gew.-% polymerisierten Einheiten aus (Meth)Acrylsäure-$C_1$-$C_8$-alkylestern, (Meth)Acrylsäureamid, N-Alkyl-substituierten (Meth)Acrylsäureamiden, (Meth)Acrylnitril sowie ihren Gemischen,

wobei die Summe der Komponenten stets 100 % beträgt.

Die Komponente IV kann auch aus 5-85 Gew.-% polymerisierten Einheiten aus

a) 0- 90 Gew.-% Styrol

b) 10-100 Gew.-% (Meth)Acrylsäure-$C_1$-$C_8$-Alkylestern

c) 0-90 Gew.-% (Meth)Acrylnitril

bestehen,

wobei die Summe der Komponenten IVa bis IVc stets 100 % und die Summe der Komponenten I-IV ebenfalls stets 100 % beträgt.

Vorzugsweise besteht die Komponente IV aus 5-65 Gew.-% polymerisierten Einheiten aus Vinylacetat.

Ferner ist Gegenstand der Erfindung ein Verfahren zur Herstellung von Copfropfpolymerisatdispersionen, dadurch gekennzeichnet, daß Mischungen aus

I. 8-90 Gew.-% endständig OH-funktionellen Organopolysiloxanen

II. 0-40 Gew.-% Organopolysiloxanen mit Trimethylsilylendgruppen

III. 4,999-85 Gew.-% Ethylen-Vinylestercopolymeren mit 5-99 Gew.-% eingebauten Vinylestern

IV. 5-85 Gew.-% eines oder mehrerer Vinylmonomerer

V. 0,001-2 Gew.-% eines oder mehrerer Radikalbildner, wobei die Summe der Komponenten I-V stets 100 % beträgt, gegebenenfalls in Gegenwart von kettenübertragenden Substanzen oder Molekulargewichtsreglern, bei Temperaturen zwischen Raumtemperatur und + 250 °C und Drücken zwischen 0,133 bar und 500 bar einer Polymerisationsreaktion unterzogen werden.

Des weiteren sind Gegenstand der Erfindung bei Raumtemperatur vernetzbare Organopolysiloxanmassen, die Copfropfpolymerisatdispersionen und zusätzlich Vernetzer, Härtungskatalysatoren, Füllstoffe und gegebenenfalls weiter Zuschlagstoffe enthalten.

Ferner ist Gegenstand der Erfindung die Verwendung von bei Raumtemperatur vernetzbaren Organopolysiloxanmassen, die die erfindungsgemäßen Copfropfpolymerisatdispersionen enthalten, als Ein- oder Zweikomponentensysteme für Dichtungsmassen.

Die Herstellung der Copfropfpolymerisatdispersionen geschieht in der Weise, daß Mischungen aus einem endständig OH-funktionellen Organopolysiloxan, einem Ethylen-Vinylestercopolymeren mit 5-99 Gew.-% eingebautem Vinylester, vorzugsweise Vinylacetat, und einem oder mehrerer Vinylmonomerer gegebenenfalls in Gegenwart von Lösungsmitteln oder Verdünnungsmitteln wie z. B. Wasser und gegebenenfalls Molekulargewichtsreglern in Gegenwart eines oder mehrerer Radikalbildner auf eine, die Polymerisation auslösende Reaktionstemperatur gebracht werden. Falls gewünscht, können auch Mischungen aus endständig OH-funktionellen und nicht funktionellen Organopolysiloxanen in die Reaktionsmischung eingetragen werden. Die Polymerisation kann nach kontinuierlichem oder diskontinuierlichem Verfahren durchgeführt werden. Im Prinzip ist die Reihenfolge der Zugabe der zur Reaktion zu bringenden Komponenten beliebig, die besten Resultate werden aber erzielt, wenn Mischungen aus Siloxan- und Poly-Ethylen-Vinylesterkomponente und Vinylmonomeren gleichzeitig bei der Durchführung der Polymerisationsreaktion eingesetzt werden.

Die endständig OH-funktionellen Organopolysiloxane sind im wesentlichen linear und werden durch die folgende Formel dargestellt :

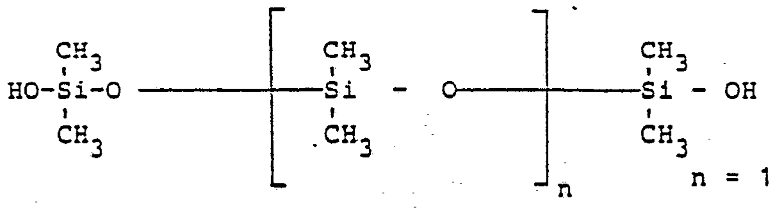

n = 10 bis 5000

Neben Methylgruppen können bis 30 Mol-% Ethyl-, Vinyl- und Phenylgruppen in den Organopolysiloxankomponenten enthalten sein, bevorzugt werden aber methylsubstituierte Organopolysiloxane eingesetzt.

Die eingesetzten Ethylen-Vinylestercopolymeren werden nach den bekannten Verfahren der Mittel- oder Hochdrucksynthese, gegebenenfalls in Lösungsmitteln wie tert.-Butanol oder in wäßriger Emulsion hergestellt.

Als Vinylester kommen organische Vinylester von gesättigten, gegebenenfalls durch Halogen, insbesondere Chlor, substituierten $C_1$-$C_{18}$-Monocarbonsäuren in Frage, wie Vinylformiat, Vinylacetat, Vinylpropionat, Vinylchlorpropionat, Vinylbutyrat, Vinylisobutyrat, Vinyllaurinat, Vinylmyristinat, Vinylstearat, Vinylbenzoat. Bevorzugt wird Vinylacetat eingesetzt. Die Molekulargewichte der Ethylen-Vinylestercopolymeren liegen zwischen 1 000 und über 1 Million, vorzugsweise 1 500 und 250 000.

Falls gewünscht, können die Ethylen-Vinylestercopolymeren ganz oder teilweise verseift verwendet werden.

Als für die Pfropfreaktion besonders geeignete Vinylmonomere seien beispielhaft aufgeführt :

Olefine wie Ethylen, Propylen, Isobutylen, Vinylester aliphatischer oder aromatischer Carbonsäuren, vorzugsweise Vinylacetat, Vinylpropionat, α,β-ungesättigte Mono- oder Dicarbonsäuren und ihre Derivate, erwähnt seien (Meth)Acrylsäure, Methyl (meth)acrylat, Ethyl- (meth)acrylat, Propyl- bzw. Isopropyl (meth)-acrylat, n-Butyl-, iso- oder tert.-Butyl (meth)acrylat, 2-Ethylhexyl (meth)acrylat, (Meth)Acrylamid, N-Alkyl-substituierte (Meth)Acrylamidderivate, (Meth)Acrylnitril, Maleinsäureanhydrid, Maleinsäureamide, N-Alkyl-maleinimid, Maleinsäure-halb- oder -diester, Vinylaromaten wie Styrol, α-Methylstyrol, 4-Chlorstyrol, Vinylchlorid, Vinylidenchlorid, Vinylidenfluorid, Tetrafluorethylen, Vinylether wie Ethylvinylether oder n-Butylvinylether ; aus der Reihe der Allylverbindungen seien angeführt Allylalkohol, Allylacetat, Isobutendiacetat, 2-Methylenpropandiol-1,3, Allylethylcarbonat, Allylphenylcarbonat. Falls die Vernetzung oder Erhöhung der Molekulargewichte der Vinylharzphase gewünscht wird, können mehrfach ungesättigte Vinylverbindungen oder Allylverbindungen eingesetzt werden. Erwähnt seien Divinylbenzol, (Meth)Acrylsäureester mehrwertiger Alkohole wie z. B. Ethylenglykoldimethacrylat, Diethylenglykoldiacrylat und Divinylether.

Die radikalische Polymerisation der Vinylmonomeren kann in an und für sich bekannter Weise mit Hilfe von Radikalbildnern, UV-Strahlen, α- oder β-Strahlen oder thermisch ohne weitere Zusätze gestartet werden. Die strahlungsinitiierte Polymerisation wird vorzugsweise in Gegenwart von Sensibilisatoren durchgeführt (vgl. z. B. A.D. Jenkins, A. Ledwith, Reactivity, Mechanism and Structure in Polymer Chemistry, John Wiley & Son, London, New York, 1974, S. 465).

Um die radikalische Polymerisation der Vinylmonomeren zu starten, werden Radikalbildner in Mengen zwischen 0,001 bis 2, vorzugsweise 0,02 bis 0,8 Gew.-%, bezogen auf die Gesamtmischung aus Organopolysiloxan, EVA-Copolymer und Vinylmonomere eingesetzt. Als Radikalbildner seien beispielhaft aufgeführt Azo-Initiatoren wie Azo-bis-isobuttersäurenitril (AIBN), Azoester, Azo-Iminoester oder Azo-N-alkylamide, Peroxide wie di-tert.-Butylperoxid, Dicumylperoxid, Di-Benzoylperoxid, Perester wie Amylperpivalat, tert.-Butylperpivalat, tert.-Butylperoctoat, t-Butylperbenzoat, tert.-Butylperneodecanoat, Percarbonate wie Cyclohexylpercarbonat oder Bisisopropylpercarbonat oder Hydroperoxide wie z. B. Cumylhydroperoxid, tert.-Butylhydroperoxid.

Geeignete Initiatoren sind ferner Benzpinakol, Benzpinakolderivate oder andere thermisch hochsubstituierte Ethanderivate.

Die Polymerisation kann ferner mit Hilfe von Redox-systemen bei tieferen Temperaturen als den rein thermischen Zerfallstemperaturen der Radikalbildner gestartet werden.

Als Redox-Initiatoren seien beispielhaft erwähnt Kombinationen aus Peroxiden und Aminen, wie z. B. Benzoyl-peroxid und Triethylamin, Trialkylborverbindungen und Sauerstoff, Hydroperoxide und Sulfinsäuren, Formaldehyd oder Aldosen oder Kombinationen mit niederwertigen Übergangsmetallsalzen oder Peroxid/$SO_2$-Systeme.

Die Polymerisationsreaktion kann kontinuierlich oder diskontinuierlich, drucklos oder bei Reaktionsdrücken bis z. B. 300 bar, vorzugsweise bis 15 bar, bei Reaktionstemperaturen zwischen − 20 °C und + 250 °C, vorzugsweise 70 bis 190 °C, durchgeführt werden. Falls gewünscht, kann die Polymerisation auch in Gegenwart von Lösungsmitteln oder Verdünnungsmitteln durchgeführt werden, genannt seien Wasser, Alkohole, wie Methanol, Ethanol, tert.-Butanol, aliphatische oder aromatische Kohlenwasserstoffe, Halogenkohlenwasserstoffe wie Chlorbenzol oder fluorierte Verbindungen, Ether wie Dioxan oder Tetrahydrofuran, Ester wie z. B. Essigsäureethylester.

Vorzugsweise wird die Polymerisation aber lösungsmittelfrei durchgeführt.

Falls gewünscht, kann die Polymerisationsreaktion in Gegenwart von Molekulargewichtsreglern durchgeführt werden.

Als Regler seien aufgeführt Mercaptane wie n- oder tert.-Dodecylmercaptan, Thioglykol, Thioglycerin oder Thioessigsäureester, ferner schwefelfreie Molekulargewichtsregler wie Kohlenwasserstoffe, beispielhaft seien genannt Paraffinfraktionen wie z. B. Petrolether, Leichtoder Waschbenzin, α-Olefine wie z. B. Propylen, Isobutylen, Buten-1, ferner Ketone wie z. B. Aceton, Methylethylketon oder Cyclohexanon, ferner Aldehyde wie z. B. Formaldehyd, Acetaldehyd, Propionaldehyd, Isobutyraldehyd oder Allylverbindungen wie z. B. Allylalkohol, Allylacetat, Isobutendiacetat oder Allylcarbonate. Als Telogene kommen ferner in Frage Halogenkohlenwasserstoffe wie Methylenchlorid, Tetrachlorethan, Dibromethan usw. Wie zu erwarten war, lassen sich mit Hilfe derartiger Regler die Viskositäten der Dispersionen steuern.

Die Umsetzung der eingesetzten Monomeren wird vom gewählten Polymerisationsverfahren und den Reaktionsbedingungen bestimmt. Bei der diskontinuierlichen Polymerisationsweise werden möglichst hohe Umsätze angestrebt, so daß mindestens 80 % der eingesetzten Monomeren, vorzugsweise aber mehr als 90 % umgesetzt werden. Die Entfernung der Restmonomeren erfolgt nach bekannten Verfahren destillativ bei Normaldruck oder unter vermindertem Druck. Die nach der Aufarbeitung in den Dispersionen noch effektiv gefundenen Restmonomergehalte sind vernachlässigbar gering, sie liegen im allgemeinen unter 1 000 ppm, vorzugsweise unter 100 ppm.

Falls gewünscht, können nach beendeter Polymerisation in den Ansatz Antioxidantien, Stabilisatoren, UV-Absorber, Alterungsschutzmittel, Weichmacher, fungistatisch und bakteriostatisch wirkende Substanzen eingetragen werden.

Ferner können die üblicherweise bei der Herstellung von Silikon-Elastomeren verwendeten Füllstoffe eingesetzt werden. Derartige Füllstoffe sind Kieselsäuren, die nach verschiedenen Verfahren hergestellt wurden und unterschiedliche spezifische Oberflächen aufweisen.

Die erfindungsgemäß erhaltenen Silikon-Ethylen-Vinyl-estercopolymer-Vinylpolymerisat-Dispersionen sind besonders für die Verwendung in bei Raumtemperatur härtenden 1- und 2-Komponentenmassen geeignet. Solche Massen, die nach dem Kondensationsprinzip aushärten, bestehen bekanntlich aus hydroxylendblockierten Polydiorganosiloxanen, Vernetzern, Füllstoffen und Katalysatoren.

Die hydroxylendblockierten Polydiorganosiloxane können ganz oder teilsweise durch die erfindungsgemäßen Copfropfpolymerisatdispersionen ersetzt werden. Als Vernetzer werden Silane mit mindestens 3 hydrolytisch leicht abspaltbaren Gruppen im Molekül wie Carbonsäure-, Carbonsäureamid-, Oxim-, Aminoxid- und Amingruppen eingesetzt. Verstärkende Füllstoffe sind z. B. pyrogen erzeugte Siliciumdioxide, als nicht verstärkender Füllstoff kommt z. B. Kreide in Frage. Als Katalysatoren verwendet man u.a. organische Zinnverbindungen wie Dibutylzinndilaurat.

Silikonmassen, in denen die erfindungsgemäßen Copfropfpolymerisat-Dispersionen verwendet werden, zeigen im Vergleich mit den bisher bekannten Silikonmassen eine wesentlich verbesserte Überstreichbarkeit mit handelsüblichen Lacken, die z. B. auf Alkydharz- oder Polyurethanbasis beruhen. Die bei Raumtemperatur ausgehärteten Silikonmassen, in denen die erfindungsgemäßen Copfropfpolymerisate als aufbauende Bestandteile enthalten sind, können wie Holz lackiert werden. Ferner wird bei diesen neuartigen Systemen ausgezeichnete Haftung, auch bei Nässe, auf Holz, Metallen und Beton festgestellt. Die folgenden Beispiele erläutern die Herstellung der erfindungsgemäßen Silikon-Ethylen-Vinylestercopolymerisat-Vinylpolymerdispersionen.

Herstellung der Ausgangssubstanzen :

Die Herstellung der OH-funktionellen Polysiloxane geschieht in an sich bekannter Weise (vgl. z. B. W. Noll, Chemie und Technologie der Silikone, Verlag Chemie GmbH, Weinheim/Bergstr., 2. Auflage, 1968, Kap. 5, S. 162 ff).

Die in den Beispielen aufgeführten OH-funktionellen Polydimethylsiloxane sind wie folgt gekennzeichnet :

| OH-Polysiloxan-Nr. | Viskosität [mPas] bei 20°C |
|---|---|
| 1 | 5000 |
| 2 | 10000 |
| 3 | 18000 |
| 4 | 50000 . |

Die Ethylen-Vinylestercopolymeren (EVA) sind durch die folgenden Angaben charakterisiert :

| EVA | Vinylacetatgehalt (Gew.-%) | $\eta$ [dl/g] |
|---|---|---|
| A | 45 | 1,4 |
| B | 42 | 0,15 |
| C | 44 | 0,09 |
| D | 62 | 1,4 |
| E | 45 | 0,25 |

Beispiel 1

In einem 3 l-Kessel werden 1 000 g OH-Polysiloxan 1 unter Stickstoff auf 110 °C erwärmt. Dann wird eine Lösung aus 350 g Styrol, 350 g n-Butylacrylat, 300 g EVA-E und 3,5 g Benzoylperoxid innerhalb von 3 Stunden hinzugetropft. Anschließend noch 3 Stunden bei 110 °C nachgerührt. Die nicht umgesetzten Monomeren werden destillativ entfernt. Man erhält eine homogene, weiße Dispersion mit einer Viskosität von 43 000 mPas bei 25 °C.

Beispiel 2

In einem 3 l-Kessel werden unter Stickstoff 1 000 g OH-Polysiloxan 1 auf 110 °C erhitzt, dann wird eine Lösung von 700 g Styrol, 300 g EVA-E und 3,5 g Benzoylperoxid innerhalb von 3 Stunden hinzugegeben. Man rührt 3 Stunden bei 110 °C nach und zieht die flüchtigen Anteile im Vakuum ab. Man erhält eine stabile Dispersion mit einer Viskosität von 48 000 mPas.

Beispiel 3

In einem 40 l-Rührautoklaven werden 14,5 kg OH-Polysiloxan 1 und 4,35 kg EVA-B unter Stickstoff auf 110 °C erwärmt. Dann werden 2 Lösungen gleichzeitig innerhalb von 3 Stunden hinzugetropft :

Lösung 1 :
9 kg Vinylacetat,

Lösung 2 :
1,15 kg Vinylacetat und 51 g Benzoylperoxid.
Anschließend wird noch 3 Stunden bei 110 °C nachgerührt. Die flüchtigen Anteile werden destillativ im Vakuum entfernt. Man erhält eine homogene, feinteilige Dispersion mit einer Viskosität von 33 000 mPas.

Beispiele 4 und 5

In einem 40 l-Rührautoklaven werden unter Stickstoff bei 110 °C die in der Tabelle angegebenen Lösungen innerhalb von 3 Stunden zu 14 500 g OH-Polysiloxan 1 hinzugegeben :

| Bsp. Nr. | Styrol | n-Butylacrylat | EVA -B | -C | Benzoylperoxid | Viskosität mPas |
|---|---|---|---|---|---|---|
| 4 | 5075 | 5075 | 4350 | - | 51 | 24 000 |
| 5 | 5075 | 5075 | - | 4350 | 51 | 28 000 |

Anschließend wird noch 3 Stunden bei 110 °C bis zu einem Monomerumsatz von 92 % nachpolymerisiert. Die flüchtigen Anteile werden destillativ im Vakuum entfernt. Die fertigen Dispersionen weisen die in der Tabelle angegebenen Viskositäten auf.

Beispiel 6

In einem 3 l Druckautoklaven werden 1 000 g OH-Polysiloxan 2, 200 g EVA-A, 500 g Styrol und 50 g Methylacrylat unter Rühren mit einem Blattrührer auf 200 °C erwärmt. Bei 200 °C wird eine Lösung von 1,8 g Ditert.-Butylperoxid in 300 g Styrol, 50 g Methylacrylat und 0,5 g tert.-Dodecylmercaptan innerhalb

von 2 Stunden hinzugegeben. Nach weiteren 2 Stunden Rühren wird abgekühlt und das Produkt abgelassen. Der Monomerumsatz ist praktisch quantitativ. Die Viskosität der Dispersion beträgt 14 500 mPas.

Beispiel 7

100 g OH-Polysiloxan 1 werden auf 170 °C erwärmt. Dann wird eine Lösung von 18,75 g EVA-A in 71,25 g Styrol, 10 g Methylacrylat und 0,55 g tert.-Butylperpivalat innerhalb von 1 Stunde hinzugegeben. Anschließend wird 1 Stunde bei 170 °C nachgerührt und sodann die flüchtigen Anteile destillativ entfernt. Die fertige Dispersion hat eine Viskosität von 24 000 mPas.

Beispiel 8

Unter Stickstoff werden 1 000 g OH-Polysiloxan 1 auf 80 °C erwärmt und innerhalb von 2 Stunden unter Rühren eine Lösung von 2 360 g tert.-Butanol, 640 g EVA-D, 1 000 g Vinylacetat und 6 g tert.-Butylperpivalat hinzugegeben. Dann wird 4 Stunden bei 80 °C nachgerührt. Lösungsmittel und Restmonomere werden destillativ entfernt. Die erhaltene Dispersion weist eine Viskosität von 147 000 mPas auf.

Beispiel 9

In einem 6 l Rührkessel werden unter Stickstoff bei 80 °C Innentemperatur 500 g EVA-A in 2 000 g tert.-Butanol gelöst. Dann wird eine Lösung von 500 g Vinylacetat, 500 g tert.-Butanol und 1,5 g tert.-Butylperpivalat hinzugegeben und 2 Stunden gerührt. Dann tropft man eine Lösung von 1 000 g OH-Polysiloxan 3, 500 g Vinylacetat und 2 g tert.-Butylperpivalat in 1 Stunde hinzu. Man rührt 4 Stunden nach und destilliert anschließend Lösungsmittel und Restmonomere ab. Die homogene Dispersion hat eine Viskosität von 141 000 mPas. Die nach dem hier beschriebenen Verfahren hergestellten Massen wurden mit Hilfe von Vernetzern und die Vernetzung fördernden Katalysatoren nach folgender Rezeptur abgemischt und unter dem Einfluß von Luftfeuchtigkeit ausgehärtet:

200 g Copfropfpolymerisat

10,4 g eines Titankomplexes der folgenden ungefähren Zusammensetzung:

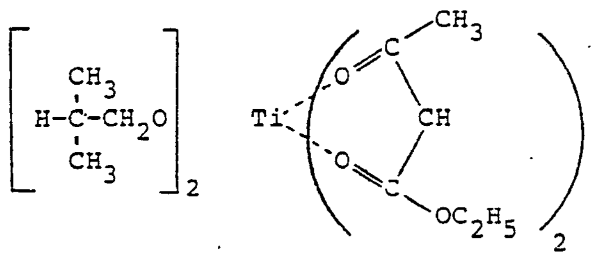

11,4 g Bis-(N-methylbenzamido)-ethoxymethylsilan

2,2 g Dibutylzinndiacetat

Die vernetzten Produkte sind elastisch und klebfrei. Sie wurden mit einem Alkydallack angestrichen, dessen Haftung auf dem Silikon nach 7 Tagen mit Hilfe des Gitterschnitt-Testes ermittelt wurde, indem man auf der lackierten Oberfläche eine Quadrat von 2,54 cm Kantenlänge mit einer Rasierklinge in 100 gleich große quadratische Stücke zerschneidet, so daß man eine bemalte Oberfläche mit gitterförmigem Aussehen erhält. Auf dieses Gitter wird dann ein Klebstreifen (Tesafilm Nr. 101 der Fa. Beiersdorf AG Hamburg) fest aufgepreßt. Der Klebstreifen wird hierauf entfernt, indem man ihn unter einen Winkel von etwa 30° langsam abzieht. Der prozentuale Wert für die Retention des Lakkes ergibt sich aus der Anzahl der bemalten, quadratischen Stücke, die nach dem Entfernen des Klebestreifens auf der gehärteten Zubereitung verblieben. Die physikalischen Eigenschaften, sowie die Ergebnisse des Gitterschnitt-Tests gehen aus der folgenden Tabelle hervor.

Für die Vergleichsbeispiele 10 und 11 wurden Polysiloxan 1 im Beispiel 10 und Polysiloxan 4 im Beispiel 11 anstelle der Copfropfpolymerisate verwendet.

(Siehe Tabelle Seite 8 f.)

| Beispiel Nr. | Lackverlauf | Lackhaftung % | E-Modul (100 % Dehnung) [N/mm²] | Reißfestigkeit [N/mm²] | Bruchdehnung % |
|---|---|---|---|---|---|
| 1 | gut | 100 | 0,260 | 0,572 | 457 |
| 2 | befriedigend | 100 | 0,762 | - | 100 |
| 3 | gut | 95 | 0,244 | 0,327 | 498 |
| 4 | gut | 67 | 0,234 | 0,362 | 400 |
| 5 | gut | 72 | 0,274 | 0,390 | 427 |
| 6 | gut | 63 | - | - | - |
| 7 | gut | 44 | - | - | - |
| 8 | gut | 33 | 0,614 | 1,141 | 302 |
| 9 | gut | 42 | 0,578 | 1,269 | 330 |
| 10 | schlecht | 0 | 0,141 | 0,299 | 295 |
| 11 | schlecht | 18 | 0,097 | 0,313 | 544 |

**Patentansprüche**

1. Copfropfpolymerisatdispersionen, dadurch gekennzeichnet, daß sie
I. 10-90 Gew.-% endständig OH-funktionelle Organopolysiloxane,
II. 0-40 Gew.-% Organopolysiloxane mit Trimethylsilylendgruppen,
III. 5-85 Gew.-% Ethylen-Vinylestercopolymere mit 5-99 Gew.-% eingebautem Vinylester, und
IV. 5-85 Gew.-% in Gegenwart von Mischungen aus diesen Organopolysiloxanen und Ethylen-Vinylestercopolymeren polymerisierte Einheiten aus Vinylverbindungen,
und über Vinylpolymerisatbrücken verknüpfte Organopolysiloxan- und Ethylen-Vinylestercopolymer-Komponenten enthalten,
wobei die Summe der Komponenten I-IV stets 100 % beträgt.

2. Copfropfpolymerisatdispersion gemäß Anspruch 1, dadurch gekennzeichnet, daß die Komponente IV aus 5-85 Gew.-% polymerisierten Einheiten aus Vinylester, α,β-ungesättigten Carbonsäuren, Derivaten α,β-ungesättigter Mono- oder Dicarbonsäuren, Vinylaromaten wie Styrol, α-Methylstyrol oder 4-Chlorstyrol, α-Olefinen wie Ethylen, Propylen, Buten-1 oder Isobutylen, halogenierte Vinylmonomeren wie Vinylchlorid, Vinylidenchlorid, Vinylfluorid, Vinylidenfluorid, Tetrafluorethylen, Trifluorchlorethylen, Vinylether wie Ethylvinylether, n-Butylvinylether, Allylverbindungen wie Allylalkohol, Allylacetat, Allylcarbonate, Diallylcarbonat, Diallylphthalat, Divinylverbindungen wie Divinylbenzol, Divinylether oder (Meth)Acrylsäureestern mehrwertiger Alkohle oder Gemische dieser Monomeren, besteht.

3. Copfropfpolymerisatdispersionen gemäß einem der Ansprüche 1 oder 2, dadurch gekennzeichnet, daß sie zusätzlich als Komponente V sowie bis zu 80 Gew.-% polymerisierte Einheiten aus (Meth)Acrylsäure-$C_1$-$C_8$-alkylestern, (Meth)-Acrylsäureamid, N-Alkyl-substituierten (Meth)-Acrylsäureamiden, (Meth)Acrylnitril sowie ihren Gemischen, enthalten, wobei die Summe der Komponenten stets 100 % beträgt.

4. Copfropfpolymerisatdispersionen gemäß einem der Ansprüche 1 oder 2, dadurch gekennzeichnet, daß die Komponente IV aus 5-85 Gew.-% polymerisierten Einheiten aus
a) 0- 90 Gew.-% Styrol
b) 10-100 Gew.-% (Meth)Acrylsäure-$C_1$-$C_8$-Alkylestern
c) 0- 90 Gew.-% (Meth)Acrylnitril,
wobei die Summe der Komponenten IVa bis IVc stets 100 % beträgt, besteht.

5. Copfropfpolymerisatdispersionen gemäß einem der Ansprüche 1 oder 2, dadurch gekennzeichnet, daß die Komponente IV aus 5-65 Gew.-% polymerisierten Einheiten aus Vinylacetat besteht.

6. Verfahren zur Herstellung von Copfropfpolymerisatdispersionen gemäß einem der Ansprüche 1 bis 5, dadurch gekennzeichnet, daß Mischungen aus
I. 8-90 Gew.-% endständig OH-funktionellen Organopolysiloxanen,
II. 0-40 Gew.-% Organopolysiloxanen mit Trimethylsilylendgruppen,
III. 4,999-85 Gew.-% Ethylen-Vinylestercopolymeren mit 5-99 Gew.-% eingebauten Vinylestern,
IV. 5-85 Gew.-% eines oder mehrerer Vinylmonomerer,
V. 0,001-2 Gew.-% eines oder mehrerer Radikalbildner, wobei die Summe der Komponenten I-V

stets 100 % beträgt, gegebenenfalls die Gegenwart von kettenübertragenden Substanzen oder Molekulargewichtsreglern, bei Temperaturen zwischen Raumtemperatur und + 250 °C und Drücken zwischen 0,133 bar und 500 bar einer Polymerisationsreaktion unterzogen werden.

7. Beim Raumtemperatur vernetzbare Organopolysiloxanmassen, die Copfropfpolymerisatdispersionen gemäß einem der Ansprüche 1 bis 5 und zusätzlich Vernetzer, Härtungskatalysatoren, Füllstoffe und gegebenenfalls weitere Zuschlagstoffe enthalten.

8. Verwendung von bei Raumtemperatur vernetzbaren Organopolysiloxanmassen, die Copfropfpolymerisatdispersionen gemäß einem der Ansprüche 1 bis 5 enthalten, als Ein- oder Zweikomponentensysteme für Dichtungsmassen.

**Claims**

1. Co-grafted polymer dispersions, characterised in that they contain

I. 10-90 % by weight of organopolysiloxanes containing terminal OH functional groups,

II. 0-40 % by weight of organopolysiloxanes containing terminal trimethylsilyl groups,

III. 5-85 % by weight of ethylene/vinyl ester copolymers containing 5-99 % by weight of incorporated vinyl ester, and

IV. 5-85 % by weight of units of vinyl compounds which have been polymerised in the presence of mixtures of these organopolysiloxanes and ethylene/vinyl ester copolymers, and organopolysiloxane and ethylene/vinyl ester copolymer components linked via vinyl polymer bridges,

the sum of components I-IV always being 100 %.

2. Co-grafted polymer dispersion according to Claim 1, characterised in that component IV consists of 5-85 % by weight of polymerised units of vinyl ester, α,β-unsaturated carboxylic acids, derivatives of α,β-unsaturated mono- or dicarboxylic acids, vinyl aromatics such as styrene, α-methylstyrene or 4-chlorostyrene, α-olefins such as ethylene, propylene, 1-butene or isobutylene, halogenated vinyl monomers such as vinyl chloride, vinylidene chloride, vinyl fluoride, vinylidene fluoride, tetrafluoroethylene or trifluorochloroethylene, vinyl ethers such as ethyl vinyl ether or n-butyl vinyl ether, allyl compounds such as allyl alcohol, allyl acetate, allyl carbonates, diallyl carbonate or diallyl phthalate, divinyl compounds such as divinylbenzene or divinyl ether or (meth)acrylic acid esters of polyhydric alcohols or mixtures of these monomers.

3. Co-grafted polymer dispersions according to one of Claims 1 or 2, characterised in that they additionally contain, as component V, up to 80 % by weight of polymerised units of (meth)acrylic acid-$C_1$-$C_8$-alkyl esters, (meth)acrylamide, N-alkyl-substituted (meth)acrylamides, (meth)acrylonitrile and mixtures thereof, the sum of the components always being 100 %.

4. Co-grafted polymer dispersions according to one of Claims 1 or 2, characterised in that component IV consists of 5-85 % by weight of polymerised units of

a) 0-90 % by weight of styrene,

b) 10-100 % by weight of (meth)acrylic acid-$C_1$-$C_8$-alkyl esters, and

c) 0- 90 % by weight of (meth)acrylonitrile,

the sum of components IVa to IVc always being 100 %.

5. Co-grafted polymer dispersions according to one of Claims 1 or 2, characterised in that component IV consists of 5-65 % by weight of polymerised units of vinyl acetate.

6. Process for the preparation of co-grafted polymer dispersions according to one of Claims 1 to 5, characterised in that mixtures of

I. 8-90 % by weight of organopolysiloxanes containing terminal OH functional groups,

II. 0-40 % by weight of organopolysiloxanes containing terminal trimethylsilyl groups,

III. 4.999-85 % by weight of ethylene/vinyl ester copolymers containing 5-99 % by weight of incorporated vinyl esters,

IV. 5-85 % by weight of one or more vinyl monomers, and

V. 0.001-2 % by weight of one or more radical forming agents,

the sum of components I-V always being 100 %,

are subjected to a polymerisation reaction, if appropriate in the presence of chain transfer substances or molecular weight regulators, at temperatures between room temperature and + 250 °C and under pressures between 0.133 bar and 500 bar.

7. Organopolysiloxane compositions which can be cross-linked at room temperature and which contain co-grafted polymer dispersions according to one of Claims 1 to 5 and, in addition, cross-linking agents, curing catalysts, fillers and, if appropriate, further additives.

8. Use of organopolysiloxane compositions which can be cross-linked at room temperature and which contain co-grafted polymer dispersions according to one of Claims 1 to 5, as one- or two-component systems for sealing compositions.

**Revendications**

1. Dispersions de copolymères greffés caractérisées en ce qu'elles contiennent

I. 10 à 90 % en poids d'organopolysiloxannes à fonctions terminales OH,

II. 0 à 40 % en poids d'organopolysiloxannes à groupes terminaux triméthylsilyle,

III. 5 à 85 % en poids de copolymères éthylène-ester vinylique contenant 5 à 99 % en poids d'ester vinylique constituant, et

IV. 5 à 85 % en poids de motifs, polymérisés en présence de mélanges de ces organopolysiloxannes et copolymères éthylène-ester vinylique, de composés vinyliques, et des composants organopolysiloxannes et copolymères éthylène-ester vinylique reliés par des ponts de polymère vinylique,

la somme des composants I à IV étant dans tous les cas de 100 %.

2. Dispersion de copolymères greffés selon la revendication 1, caractérisée en ce que le composant IV consiste en 5 à 85 % en poids de motifs polymérisés d'esters vinyliques, d'acides carboxyliques alpha, bêta-insaturés de dérivés d'acides mono- ou di-carboxyliques alpha, bêta-insaturés, de composés vinylaromatiques comme le styrène, l'alpha-méthylstyrène ou le 4-chlorostyrène, d'alpha-oléfines comme l'éthylène, le propylène, le butène-1 ou l'isobutylène, de monomères vinyliques halogénés comme le chlorure de vinyle, le chlorure de vinylidène, le fluorure de vinyle, le fluorure de vinylidène, le tétrafluoréthylène, le trifluorochloréthylène, d'éthers vinyliques, comme l'oxyde d'éthyle et de vinyle, l'oxyde de n-butyle et de vinyle, de composés allyliques comme l'alcool allylique, l'acétate d'allyle, les carbonates d'allyle, le carbonate de diallyle, le phtalate de di-allyle, de composés divinyliques comme le divinylbenzène, l'éther divinylique ou d'esters (méth)acryliques d'alcool polyvalents ou de mélanges de ces monomères.

3. Dispersions de copolymères greffés selon l'une des revendications 1 ou 2, caractérisées en ce qu'elles contiennent en outre, en tant que composant V jusqu'à 80 % en poids de motifs polymérisés d'esters alkyliques en $C_1$-$C_8$ de l'acide (méth)acrylique, de (méth)acrylamide, de (méth)acrylamide à substituants N-alkyle, de (méth)acrylonitrile et leurs mélanges, la somme des composants étant de 100 % dans tous les cas.

4. Dispersions de copolymères greffés selon l'une des revendications 1 ou 2, caractérisées en ce que le composant IV consiste en 5 à 85 % en poids de motifs polymérisés de

a) 0 à 90 % en poids de styrène,

b) 10 à 100 % d'esters alkyliques en $C_1$-$C_8$ de l'acide (méth)acrylique,

c) 0 à 90 % en poids de (méth)acrylonitrile,

la somme des composants IVa) à IVc) étant de 100 % dans tous les cas.

5. Dispersions de copolymères greffés selon l'une des revendications 1 ou 2, caractérisées en ce que le composant IV consiste en 5 à 65 % en poids de motifs polymérisés d'acétate de vinyle.

6. Procédé de préparation des dispersions de copolymères greffés selon l'une des revendications 1 à 5, caractérisé en ce que l'on soumet à une réaction de polymérisation à des températures allant de la température ambiante jusqu'à + 250 °C et à des pressions de 0,133 bar à 500 bars, éventuellement en présence d'agents de transfert des chaînes ou de régulateurs de poids moléculaire, des mélanges de

I. 8 à 90 % en poids d'organopolysiloxannes fonctions OH terminales,

II. 0 à 40 % en poids d'organopolysiloxannes à groupes terminaux diméthylsilyle,

III. 4,999 à 85 % en poids de copolymères éthylène-ester vinylique contenant 5 à 99 % en poids d'ester vinylique constituant,

IV. 5 à 85 % en poids d'un ou plusieurs monomères vinyliques,

V. 0,001 à 2 % en poids d'un ou plusieurs inducteurs radicalaires,

la somme des composants I à V étant de 100 % dans tous les cas.

7. Masses d'organopolysiloxannes réticulables à température ambiante, contenant les dispersions de copolymères greffés selon l'une des revendications 1 à 5, et en outre des réticulants, des catalyseurs de durcissement, des matières de charge et le cas échéant d'autres additifs.

8. Utilisation de masses d'organopolysiloxannes réticulables, à température ambiante, contenant les dispersions de copolymères greffés selon l'une des revendications 1 à 5, en tant que systèmes à un ou deux composants pour masses d'étanchéité.